# EUROPEAN PATENT APPLICATION

(11) **EP 4 811 535 A1**
(43) Date of publication of application: **23.09.2026**
(21) Application number: 24855082.4
(22) Date of filing: 15.07.2024
(51) Int. Cl.: H01M 50/636, H01M 50/645

(54) **COVER REMOVAL DEVICE AND BATTERY LIQUID INJECTION APPARATUS**

(30) Priority: 14.11.2023 CN 202323067523 U
(71) Applicant: Wuxi Lead Intelligent Equipment Co., Ltd., Wuxi, Jiangsu 214028 (CN)
(72) Inventor: ZHOU, Yang, Wuxi, Jiangsu 214028 (CN)
(74) Representative: Rau, Schneck & Hübner Patentanwälte Rechtsanwälte PartGmbB
(86) International application number: PCT/CN2024/105408
(87) International publication number: WO 2025/102790

(57) **Abstract**

The present disclosure relates to a lid-disassembling device and a battery electrolyte injection apparatus. The lid-disassembling device comprises a rack and a conveying mechanism. Wherein, the conveying mechanism comprises a baseplate, a lifting assembly, and a gripping assembly and a plurality of blocking assemblies. When the battery that has completed quiescence moves beneath the conveying mechanism along with the pallet and the upper lid, the gripping assembly may first be driven by the lifting assembly to move downward, and the upper lid is then clamped by the gripping assembly. While the gripping assembly clamps the upper lid, the plugs of the plurality of blocking assemblies may respectively enter the plurality of injection cups and block the liquid-draining holes of the injection cups. Then, the gripping assembly is moved upward under the drive of the lifting assembly so as to remove the upper lid from the pallet and thus separate the injection cup from the battery. Since the plurality of plugs respectively block the liquid-draining holes of the plurality of injection cups, the residual electrolyte cannot leak out through the liquid-draining hole even if the electrolyte remains in the injection cup, thereby effectively preventing the battery in the pallet from being contaminated by the electrolyte. (FIG. 1)

## Description

### CROSS-REFERENCE TO RELATED APPLICATIONS

The present disclosure claims priority to a Chinese patent application No. 202323067523.1 filed with the CNIPA on November 14, 2023 and entitled "LID-DISASSEMBLING DEVICE AND BATTERY ELECTROLYTE INJECTION APPARATUS, which is hereby incorporated by reference in its entirety.

### TECHNICAL FIELD

The present disclosure relates to the technical field of lithium battery apparatus, and particularly to a lid-disassembling device and a battery electrolyte injection apparatus.

### BACKGROUND

After the lithium battery is inserted into the casing, it still needs to be moved into the battery electrolyte injection apparatus for electrolyte injection. During the operation of electrolyte injection, a plurality of batteries are typically placed in batches on a pallet and moved to the battery electrolyte injection apparatus; then, the upper lid, which contains a plurality of injection cups, is placed above the pallet, and the plurality of injection cups are docked with the injection holes of the plurality of batteries respectively. A dosed amount of electrolyte is injected into each injection cup, allowing the electrolyte to gradually flow into the interior of the battery through the liquid-draining hole at the bottom, thus achieving the electrolyte injection of the battery.

The upper lid, along with its injection cups and the batteries, is placed into an isobaric chamber to quiesce under alternating positive and negative pressure, facilitating the absorption of the electrolyte. Upon completion of the quiescence process, the upper lid is disassembled as a whole from above the pallet, allowing the batteries to be removed and proceed to the next process.

However, there is a possibility that the injection cup may not drain smoothly due to tilting of the injection cup or blockage of the liquid-draining hole, causing the electrolyte to remain in the injection cup after quiescence is completed. Consequently, when the upper lid is disassembled from above the pallet, the residual electrolyte in the injection cup might leak out and contaminate the batteries within the pallet, leading to issues such as the need for rework or scrapping of the batteries, and thereby increasing maintenance efforts.

### SUMMARY

Based on this, it is necessary to provide a lid-disassembling device and a battery electrolyte injection apparatus, in response to the above problem, that can effectively prevent the electrolyte from contaminating the battery.

A lid-disassembling device, comprising:
a rack; and
a conveying mechanism mounted on the rack and comprising a lifting assembly, a gripping assembly and a plurality of blocking assemblies, wherein the gripping assembly is capable of clamping or releasing an upper lid containing a plurality of injection cups and is capable of moving in an up-down direction under the drive of the lifting assembly so as to remove the upper lid from a pallet, and each of the blocking assemblies comprises a plug;
wherein the blocking assemblies are capable of moving along with the gripping assembly, and when the gripping assembly clamps the upper lid, plugs of the plurality of blocking assemblies are capable of respectively entering the injection cups and blocking liquid-draining holes of the injection cups.

In one of embodiments, the gripping assembly comprises a supporting plate, a driving member, and two clamping plates arranged oppositely, the supporting plate is connected to a driving end of the lifting assembly, each clamping plate is provided with a positioning pin on one side thereof facing the other clamping plate, the two clamping plates are slidably mounted on the supporting plate, and the driving member is capable of driving the two clamping plates to move closer to or away from each other, so that the positioning pin enters a mounting hole on the side surface of the upper lid or exits from the mounting hole.

In one of the embodiments, the conveying mechanism further comprises a baseplate for supporting the lifting assembly, the gripping assembly and the blocking assemblies, the baseplate is mounted on the rack, the gripping assembly further comprising a guide rod extending in the up-down direction, the baseplate is provided with a linear bearing, and the guide rod slidably extends through the linear bearing and is connected to the supporting plate at one end of the guide rod.

In one of the embodiments, the plurality of blocking assemblies are mounted on the supporting plate and are capable of moving in the up-down direction along with the supporting plate.

In one of the embodiments, the plug is capable of elastically abutting against the bottom of the injection cup in the up-down direction.

In one of the embodiments, each blocking assembly further comprises a base and an elastic element, the plug is slidably mounted on the base in the up-down direction, and the elastic element applies a downward preload to the plug.

In one of the embodiments, the base is columnar, and the elastic element is a compression spring sleeved onto the base and abutting against the plug.

In one of the embodiments, further comprising a waste-discharging carrier provided on the rack, the conveying mechanism is capable of moving in a preset direction perpendicular to the up-down direction to drive the gripping assembly to move above the waste-discharging carrier, and the gripping assembly is capable of moving in the up-down direction under the drive of the lifting assembly and is capable of placing the clamped upper lid on the waste-discharging carrier.

In one of the embodiments, the rack is provided with a toothed bar extending in the preset direction, the conveying mechanism further comprises a baseplate for supporting the lifting assembly, the gripping assembly and the blocking assemblies, the baseplate is slidably mounted on the rack in the preset direction, the conveying mechanism further comprises a motor mounted on the baseplate and a gear connected to the motor, the gear is engaged with the toothed bar, and the gear is capable of rolling along the toothed bar under the drive of the motor so as to drive the baseplate to slide in the preset direction.

In one of the embodiments, further comprising a cleaning mechanism mounted on the rack, and the cleaning mechanism is capable of moving above the waste-discharging carrier in the preset direction and is capable of cleaning the plurality of injection cups placed in the upper lid of the waste-discharging carrier.

In one of the embodiments, the cleaning mechanism comprises a second baseplate, a second lifting assembly and a cleaning assembly, the second baseplate is slidably mounted on the rack in the preset direction, the second lifting assembly and the cleaning assembly are mounted on the second baseplate, the cleaning assembly is capable of moving above the waste-discharging carrier along with the second baseplate, the cleaning assembly comprises a plurality of cleaning heads, and the plurality of cleaning heads are capable of respectively entering the plurality of injection cups carried by the upper lid of the waste-discharging carrier under the drive of the second lifting assembly.

In one of the embodiments, further comprising a discharging-conveying line, and the cleaning mechanism further comprises a second gripping assembly, which is mounted on the second baseplate, is capable of clamping or releasing the upper lid, is capable of moving above the waste-discharging carrier along with the second baseplate, and is capable of moving in the up-down direction under the drive of the second lifting assembly so as to clamp the upper lid carried on the waste-discharging carrier; and
the second gripping assembly is capable of moving above the discharging-conveying line along with the second baseplate, and is capable of moving in the up-down direction under the drive of the second lifting assembly so as to place the clamped upper lid on the discharging-conveying line.

In one of the embodiments, the cleaning head is formed with a stop ring, which is capable of abutting against an opening edge of the injection cup when the cleaning head enters the injection cup and covering an opening of the injection cup.

In one of the embodiments, the stop ring is capable of elastically abutting against the opening edge of the injection cup in the up-down direction.

A battery electrolyte injection apparatus, comprising the lid-disassembling device according to any one of the above preferred embodiments.

With regards to the above lid-disassembling device and the battery electrolyte injection apparatus, when the battery that has completed quiescence moves beneath the conveying mechanism along with the pallet and the upper lid, the gripping assembly can first be driven by the lifting assembly to move downward, and the upper lid is then clamped by the gripping assembly. While the gripping assembly clamps the upper lid, the plugs of the plurality of blocking assemblies may respectively enter the plurality of injection cups and block the liquid-draining holes of the injection cups. Then, the gripping assembly is moved upward under the drive of the lifting assembly so as to remove the upper lid from the pallet carrying the battery and thus separate the injection cup from the batteries. In this process, since the plurality of plugs respectively block the liquid-draining holes of the plurality of injection cups, when the injection cup is separated from the battery, the residual electrolyte cannot leak out through the liquid-draining hole even if the electrolyte remains in the injection cup, thereby effectively preventing the battery in the pallet from being contaminated by the electrolyte.

### BRIEF DESCRIPTION OF THE DRAWINGS

In order to clearly illustrate embodiments of the present disclosure or technical solutions in the prior art, accompanying drawings that need to be used in description of the embodiments or the prior art will be briefly introduced as follows. Obviously, drawings in following description are only the embodiments of the present disclosure. For those skilled in the art, other drawings can also be obtained according to the disclosed drawings without creative efforts.
FIG. 1 is a front view of a lid-disassembling device in a preferred embodiment of the present disclosure;
FIG. 2 is a front view of a conveying mechanism in the lid-disassembling device shown in FIG. 1;
FIG. 3 is a left view of the conveying mechanism shown in FIG. 2;
FIG. 4 is a front view of a waste-discharging carrier in the lid-disassembling device shown in FIG. 1;
FIG. 5 is a left view of the waste-discharging carrier shown in FIG. 4;
FIG. 6 is a front view of a cleaning mechanism in the lid-disassembling device shown in FIG. 1;
FIG. 7 is a left view of the cleaning mechanism shown in FIG. 6;
FIG. 8 is a schematic diagram of a pallet cooperating with an upper lid in one embodiment of the present disclosure;
FIG. 9 is a left view of the pallet cooperating with the upper lid shown in FIG. 8.

### DETAILED DESCRIPTION

In order to make the above objects, features and advantages of the present disclosure more clearly understood, specific embodiments of the present disclosure will be described in detail below with reference to the accompanying drawings. In a following description, numerous specific details are set forth in order to provide a comprehensive understanding of the present disclosure. However, the present disclosure can be implemented in many other ways different from those described here, and those skilled in the art can make similar improvements without violating a connotation of the present disclosure. Therefore, the present disclosure is not limited by the specific embodiments disclosed below.

In the description of the present disclosure, it should be understood that, an orientation or positional relationship indicated by terms "center", "longitudinal", "lateral", "length", "width", "thickness", "upper", "lower", "front", "back", "left", "right", "vertical", "horizontal", "top", "bottom", inner", "outer", "clockwise", "counterclockwise", "axial", "radial", "circumferential" is based on the orientation or positional relationship shown in the accompanying drawings, and is only for convenience of describing the present disclosure and simplifying the description, rather than indicating or implying that a device or element referred to must be provided with a particular orientation, be constructed and operate in a particular orientation, and therefore should not be understood as a limitation to the present disclosure.

In addition, terms "first" and "second" are only used for descriptive purposes and should not be understood as indicating or implying relative importance or implying a number of indicated technical features. Therefore, a feature delimited with "first", "second" may expressly or implicitly comprise at least one of those features. In a description of the present disclosure, "a plurality" means at least two, such as two, three, etc., unless expressly and specifically defined otherwise.

In the present disclosure, unless expressly specified and limited otherwise, terms "mounted", "communicated", "connected", "fixed" and other terms should be interpreted in a broad sense, for example, it can be a fixed connection, a detachable connection, or integrated as one-piece; it can be a mechanical connection or an electrical connection; it can be directly connected, or indirectly connected through an intermediate medium, and it can be an internal communication between two elements or an interaction relationship between the two elements, unless otherwise explicitly defined. For those of ordinary skill in the art, specific meanings of the above terms in the present disclosure can be understood according to specific situations.

In the present disclosure, unless expressly stated and defined otherwise, a first feature "on" or "under" a second feature may be that the first feature is in direct contact with the second feature, or the first feature and the second feature are indirectly contacted through an intermediary. In addition, the first feature being "above", "over" and "on" the second feature may mean that the first feature is directly above or obliquely above the second feature, or simply means that the first feature is on a higher horizontal level than the second feature. The first feature being "below", "under" and "beneath" the second feature may mean that the first feature is directly below or obliquely below the second feature, or simply means that the first feature is on a lower horizontal level than the second feature.

It should be noted that when an element is referred to as being "fixed to" or "arranged on" another element, it can be directly on another element, or there may be an intervening element therebetween. When an element is referred to as being "connected" to another element, it can be directly connected to another element or intervening elements may also be present. Terms "vertical", "horizontal", "upper", "lower", "left", "right" and similar expressions used here are only for illustration purposes rather than indicating the only implementation.

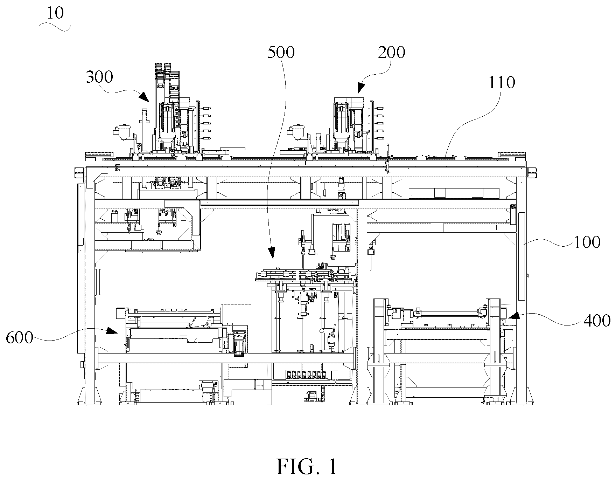

Referring to FIG. 1, the present disclosure provides a lid-disassembling device 10 and a battery electrolyte injection apparatus (not shown in figures). Wherein, the above battery electrolyte injection apparatus comprises a lid-disassembling device 10.

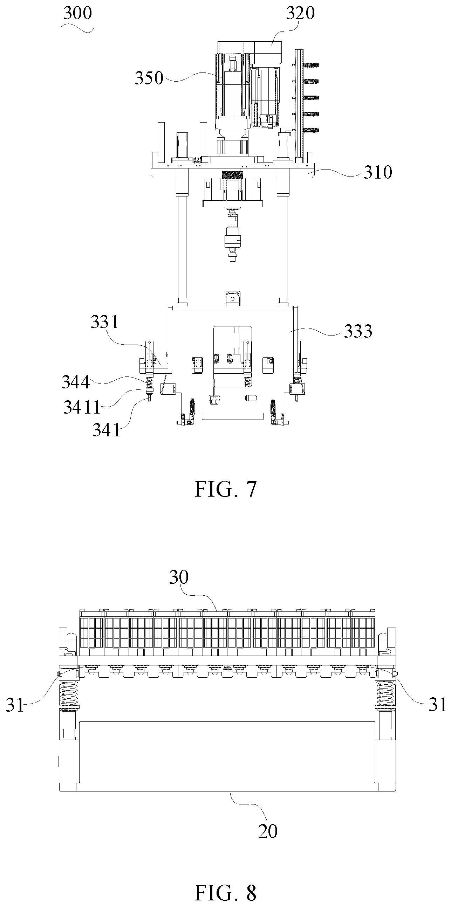

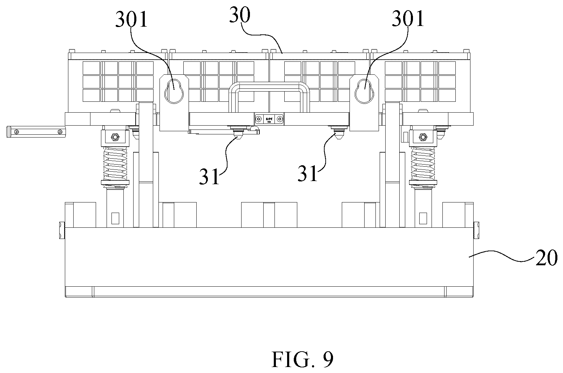

The above battery electrolyte injection apparatus is used for batch electrolyte injection into batteries. In addition, the electrolyte injection apparatus typically comprises an electrolyte injection mechanism (not shown in the figures) and an isobaric chamber (not shown in the figures) among other components. As shown in FIGS. 8 and 9, a plurality of batteries to be injected are first loaded into a pallet 20, and an upper lid 30 is then mounted on the pallet 20. The upper lid 30 contains a plurality of injection cups 31, with the number and arrangement of these injection cups 31 matching the number and arrangement of the batteries in the pallet 20. The plurality of injection cups 31 are respectively docked with the injection holes of the plurality of batteries. After the pallet 20 and the upper lid 30 are assembled, a dosed amount of electrolyte may be injected into each injection cup 31 via the electrolyte injection mechanism. Subsequently, the pallet 20 together with the upper lid 30 is transferred into the isobaric chamber to quiesce under alternating positive and negative pressure, to facilitate the flow of electrolyte into the interior of the batteries and absorption of the electrolyte.

After quiescence of the batteries is completed, the pallet 20 together with the upper lid 30 is taken out from the isobaric chamber and transferred into the lid-disassembling device 10. The lid-disassembling device 10 disassembles the upper lid 30 from the pallet 20 and separates the injection cups 31 from the batteries, while the batteries that have completed the electrolyte injection may then be conveyed with the pallet 20 to the next process.

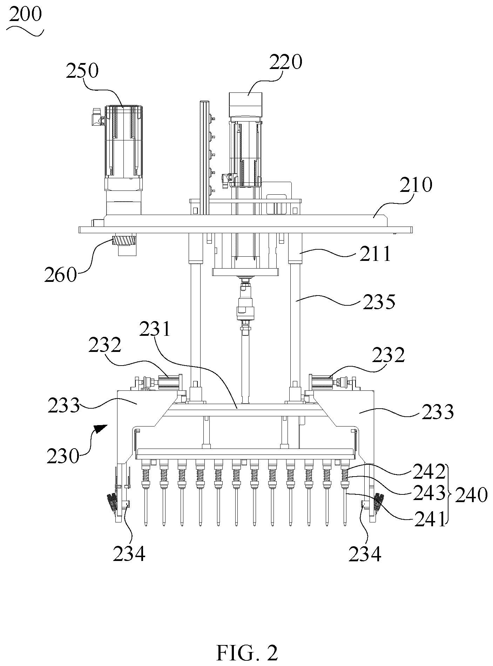

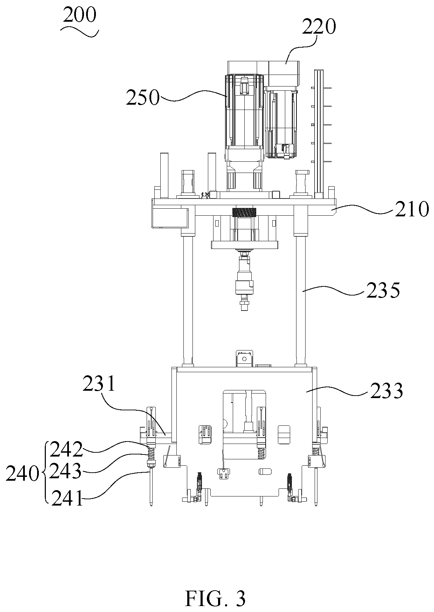

Please also refer to FIGS. 2 and 3, the lid-disassembling device 10 in the preferred embodiment of the present disclosure comprises a rack 100 and a conveying mechanism 200.

The conveying mechanism 200 comprises a baseplate 210, a lifting assembly 220, a gripping assembly 230, and a plurality of blocking assemblies 240. The baseplate 210 acts as a support and is generally a metal plate structure, and the lifting assembly 220, the gripping assembly 230, and the plurality of blocking assemblies 240 are all supported directly or indirectly by the baseplate 210. Wherein, the baseplate 210 is mounted on the rack 100, so that the conveying mechanism 200 is mounted on the rack 100. Of course, in other embodiments, the lifting assembly 220, the gripping assembly 230, and the plurality of blocking assemblies 240 may be directly supported by the rack 100.

The gripping assembly 230 is capable of clamping or releasing the upper lid 30. When quiescence of the battery is completed, the pallet 20 together with the upper lid 30 is transferred into the lid-disassembling device 10 and located below the conveying mechanism 200. Specifically, in the present embodiment, the lid-disassembling device 10 further comprises a charging-conveying line 400. The pallet 20 carrying the battery, after being removed from the isobaric chamber, can be placed on the charging-conveying line 400 after it is removed from the isobaric chamber and conveyed by the charging-conveying line 400 beneath the conveying mechanism 200.

The lifting assembly 220 is capable of driving the gripping assembly 230 to move in an up-down direction to remove the upper lid 30 from the pallet 20. Specifically, the lifting assembly 220 first drives the gripping assembly 230 to descend to a height substantially flush with the upper lid 30, so that the gripping assembly 230 may clamp the upper lid 30; after the gripping assembly 230 clamps the upper lid 30, the lifting assembly 220 first drives the gripping assembly 230 to ascend, and then the upper lid 30 may be removed from the pallet 20. The pallet 20 carrying the battery may be conveyed to the next process under the drive of the charging-conveying line 400.

The lifting assembly 220 is mounted on the baseplate 210, and may be a cylinder or a motor threaded screw pair structure, as long as the lifting assembly 220 can drive the conveying mechanism 200 to move in the up-down direction.

In the present embodiment, the gripping assembly 230 comprises a supporting plate 231, a driving member 232, and two clamping plates 233 arranged oppositely. The supporting plate 231 is connected to a driving end of the lifting assembly 220, each of the clamping plates 233 is provided with a positioning pin 234 on one side of the clamping plate 233 facing the other clamping plate 233, the two clamping plates 233 are slidably mounted on the supporting plate 231, and the driving member 232 is capable of moving the two clamping plates 233 closer to or away from each other, so that the positioning pin 234 enters a mounting hole 301 on the side surface of the upper lid 30 (see FIG. 9) or exits from the mounting hole 301.

The clamping plate 233 may be slidably provided on the supporting plate 231 via a guide rail and a slider, and the driving member 232 may be an air cylinder. The two clamping plates 233 may be driven by the same driving member 232, or may be driven respectively by two driving members 232. Under the drive of the lifting assembly 220, the supporting plate 231 is capable of moving downward until the positioning pin 234 is aligned with the mounting hole 301 on the side surface of the upper lid 30. At this time, the driving member 232 drives the two clamping plates 233 to approach each other, and the positioning pin 234 may be inserted into the mounting hole 301, thereby clamping the upper lid 30. When it is necessary to release the upper lid 30, the driving member 232 drives the two clamping plates 233 away from each other until the positioning pin 234 exits from the mounting hole 301.

Specifically, in the present embodiment, the gripping assembly 230 further comprising a guide rod 235 extending in the up-down direction, the baseplate 210 is provided with a linear bearing 211, and the guide rod 235 slidably extends through the linear bearing 211 and is connected to the supporting plate 231 at one end of the guide rod 235. Generally, a plurality of guide rods 235 are provided, which may guide the supporting plate 231 by cooperating with the linear bearing 211, so as to prevent the supporting plate 231 from shaking in the process of ascending and descending.

The number and arrangement of the blocking assemblies 240 is generally the same as the number and arrangement of the injection cups 31 in the upper lid 30. The blocking assemblies 240 may be move along with the gripping assembly 230 under the drive of the lifting assembly 220. In the present embodiment, the plurality of blocking assemblies 240 are mounted on the supporting plate 231.

Further, each of the blocking assemblies 240 comprises a plug 241. The plug 241 may be rod-shaped and extend in the up-down direction. The blocking assemblies 240 are capable of moving along with the gripping assembly 230, and when the gripping assembly 230 clamps the upper lid 30, plugs 241 of the plurality of blocking assemblies 240 are capable of respectively entering the injection cups 31 and blocking liquid-draining holes (not shown in figures) of the injection cups 31.

Specifically, while the lifting assembly 220 drives the gripping assembly 230 to move downward, the plurality of blocking assemblies 240 also move downward. Further, when the gripping assembly 230 descends to a height at which the gripping assembly 230 can clamp the upper lid 30, the plurality of plugs 241 can respectively enter the plurality of injection cups 31 and block the liquid-draining holes of the injection cups 31.

After the gripping assembly 230 clamps the upper lid 30, the gripping assembly 230 may move upward under the drive of the lifting assembly 220, so as to remove the upper lid 30 from the pallet 20 carrying the batteries and separate the injection cups 31 from the batteries. In this process, the plurality of plugs 241 respectively block the liquid-draining holes of the plurality of injection cups 31, therefore, even if the electrolyte remains in the injection cups 31, the residual electrolyte cannot leak out through the liquid-draining holes. Therefore, it is possible to effectively prevent the battery in the pallet 20 from being contaminated due to the leakage of the residual electrolyte.

In the present embodiment, the plug 241 may elastically abut against the bottom of the injection cup 31 in the up-down direction. On the one hand, the elastic abutment may prevent the plug 241 and the injection cup 31 from being damaged due to the hard contact between the plug 241 and the bottom of the injection cup 31. On the other hand, the plug 241 elastically abutting against the bottom of the injection cup 31 may produce a preload, so that the plug 241 may reliably abut against the bottom of the injection cup 31, and thus the plug 241 is not prone to be separated from the bottom of the injection cup 31 due to the influence of factors such as shaking, thereby better achieving the purpose of blocking the liquid-draining hole.

Further, in the present embodiment, each blocking assembly 240 further comprises a base 242 and an elastic element 243, the plug 241 is slidably mounted on the base 242 in the up-down direction, and the elastic element 243 applies a downward preload to the plug 241. When the plug 241 abuts against the bottom of the injection cup 31, the elastic element 243 is elastically deformed to produce a downward preload, so that the plug 241 may be reliably pressed against the bottom of the injection cup 31.

Obviously, in other embodiments, the plug 241 may also be provided as a structure formed with an elastomeric material, and the plug 241 may elastically abut against the bottom of the injection cup 31 by means of its own elasticity.

Furthermore, in the present embodiment, the base 242 is columnar, and the elastic element 243 is a compression spring sleeved onto the base 242 and abutting against the plug 241. The compression spring has high reliability and is not prone to fail. Moreover, the columnar base 242 may better constrain the compression spring, and may effectively prevent the compression spring from falling off or shifting, thereby improving the reliability of the blocking assembly 240.

After the upper lid 30 is removed from the pallet 20 by the conveying mechanism 200, it is also necessary for the upper lid 30 to be recycled for subsequent electrolyte injection of the battery. Before this, it is necessary to discharge the residual electrolyte in the injection cup 31.

Referring to FIG. 1 again, in the present embodiment, the lid-disassembling device 10 further includes a waste-discharging carrier 500 provided on the rack 100, the conveying mechanism 200 is capable of moving in a preset direction perpendicular to the up-down direction to drive the gripping assembly 230 to move above the waste-discharging carrier 500, and the gripping assembly 230 is capable of moving in the up-down direction under the drive of the lifting assembly 220 and is capable of placing the clamped upper lid 30 on the waste-discharging carrier 500.

Specifically, the preset direction refers to the left-right direction shown in FIG. 1. The waste-discharging carrier 500 can carry the upper lid 30 without obstructing the liquid-draining hole of the injection cup 31 in the carried upper lid 20. After the upper lid 30 is removed from the pallet 20 by the convey mechanism 200, the baseplate 210 may move in a preset direction until the conveying mechanism 200 is located above the waste-discharging carrier 500; the lifting assembly 220 then drives the gripping assembly 230 to descend until the upper lid 30 contacts or is about to contact the waste-discharging carrier 500, and then the gripping assembly 230 releases the clamped upper lid 30 to place the upper lid 30 on the waste-discharging carrier 500; finally, the lifting assembly 220 drives the gripping assembly 230 to ascend, and the conveying mechanism 200 returns to its original position and is ready to remove the next upper lid 30.

After the gripping assembly 230 releases the upper lid 30 and ascends, the plug 241 will also exit from the injection cup 31, thereby opening the liquid-draining hole of the injection cup 31. At this time, the residual electrolyte in the injection cup 31 may flow out from the liquid-draining hole. When the residual electrolyte in all the injection cups 31 is completely drained, the upper lid 30 may be removed from the waste-discharging assembly and recycled.

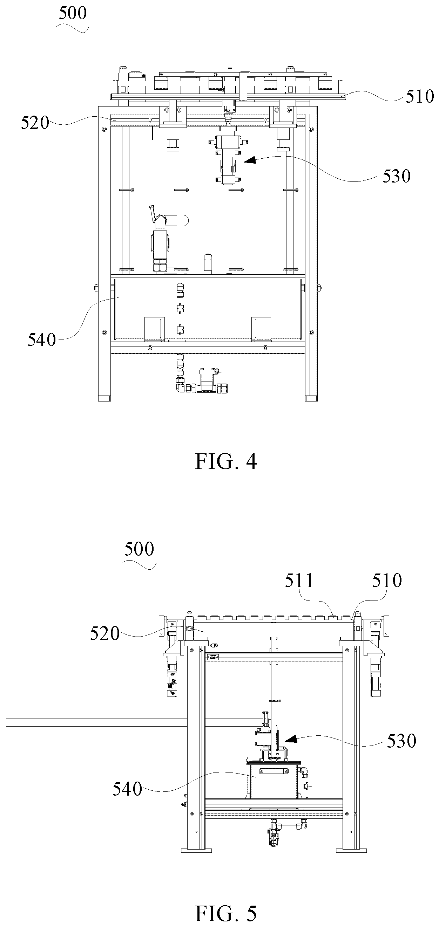

Please also refer to FIGS. 4 and 5, in the present embodiment, the waste-discharging carrier 500 comprises a porous carrier plate 510, a liquid collecting groove 520, a liquid discharging pipe 530, and a liquid storage tank 540. The porous carrier plate 510 is used for carrying the upper lid 30, and has a surface with a plurality of liquid draining nozzles 511 which can be docked with the liquid-draining holes of the injection cup 31. The liquid collecting groove 520 is provided below the porous carrier plate 510 and is in communication with the liquid draining pipe 530. The residual electrolyte in the injection cups 31 flows out from the liquid-draining holes, enters the liquid collecting groove 520 through the liquid draining nozzles 511, and is guided to the liquid storage tank 540 through the liquid draining pipe 530 for collection. In addition, the liquid-draining pipe 530 may also be connected to an external pumping device (not shown in figures) to pump away the waste liquid in the liquid storage tank 540.

Please refer to FIGS. 1 and 2 again, in the present embodiment, the rack 100 is provided with a toothed bar 110 extending in the preset direction, and the baseplate 210 is slidably mounted on the rack 100 in the preset direction. Wherein, the conveying mechanism 200 further comprises a motor 250 mounted on the baseplate 210 and a gear 260 connected to the motor 250, the gear 260 is engaged with the toothed bar 110, and the gear 260 is capable of rolling along the toothed bar 110 under the drive of the motor 250 so as to drive the baseplate 210 to slide in the preset direction.

The gear 260 may be rotatably mounted to the baseplate 210 by a rotating shaft, a bearing, or the like. When the gear 260 is driven by the motor 250 to roll along the toothed bar 110, the baseplate 210 is driven to slide in the preset direction so as to drive the lifting assembly 220, the gripping assembly 230, the blocking assembly 240, and the upper lid 30 which is being gripped by the gripping assembly 230 to move in the preset direction.

Since the liquid-draining hole of the injection cup 31 may be clogged, the residual electrolyte cannot naturally flow out through the liquid-draining hole under gravity. Moreover, the inner wall of the injection cup 31 may also accumulate a significant amount of dirt after prolonged use. At this time, before recycling the upper lid 30 on the waste-discharging carrier 500, it is also necessary to perform cleaning operations on the plurality of injection cups 31 in the upper lid 30.

Please refer to FIG. 1 again, in the present embodiment, the lid-disassembling device 10 further comprises a cleaning mechanism 300 mounted on the rack 100, and the cleaning mechanism 300 is capable of moving above the waste-discharging carrier 500 in the preset direction and is capable of cleaning the plurality of injection cups 31 placed in the upper lid 30 of the waste-discharging carrier 500.

The cleaning mechanism 300 may clean the injection cup 31 by blowing, flushing, or a combination thereof, so as to dredge the liquid-draining hole and clean the inner wall of the injection cup 31.

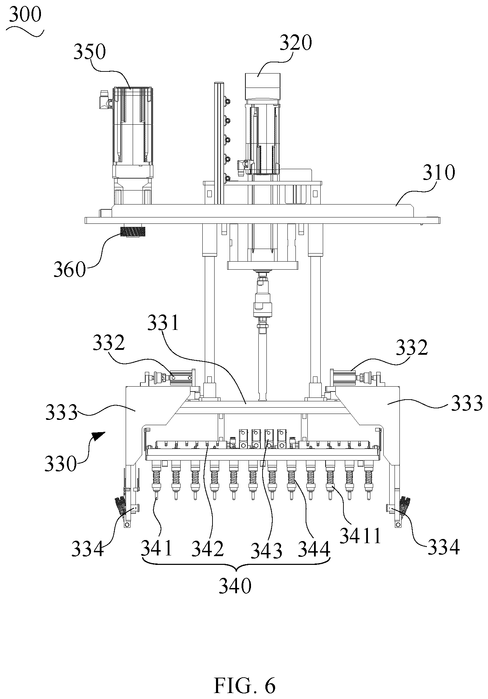

Please also refer to FIGS. 6 and 7, in the present embodiment, the cleaning mechanism 300 comprises a second baseplate 310, a second lifting assembly 320 and a cleaning assembly 340, the second baseplate 310 is slidably mounted on the rack 100 in the preset direction, the cleaning assembly 340 comprises a plurality of cleaning heads 341 which are capable of respectively entering the plurality of injection cups 31 carried by the upper lid 30 of the waste-discharging carrier 500 under the drive of the second lifting assembly 320.

The second lifting assembly 320 and the cleaning assembly 340 are both mounted on the second baseplate 310. As the second baseplate 310 moves in the preset direction, the cleaning assembly 340 can be driven to move above the waste-discharging carrier 500. Then, the second lifting assembly 320 may drive the cleaning assembly 340 to move downward until the plurality of cleaning heads 341 respectively enter the injection cups 31.

Specifically, the cleaning assembly 340 further comprises a confluence block 342 and a fluid control valve 343 and the like. The plurality of cleaning heads 341 are in communication with the confluence block 342, and the fluid control valve 343 may control whether to flow into the confluence block 342. After the cleaning heads 341 enter the injection cups 31, the fluid control valve 343 opens to allow the cleaning fluid to flow into the confluence block 342, and the cleaning fluid is ejected through the cleaning heads 341 to clean the injection cups 31.

The structure of the cleaning mechanism 300 is substantially the same as that of the conveying mechanism 200, except that the blocking assembly 240 is replaced by the cleaning assembly 340. Specifically, in the present embodiment, the cleaning mechanism 300 further includes a second motor 350 mounted on the second baseplate 310 and a second gear 360 connected to the second motor 350, the second gear 360 is engaged with the toothed bar 110, and the second gear 360 is capable of rolling along the toothed bar 110 under the drive of the second motor 350, and driving the second baseplate 310 to move in the preset direction.

Similarly, the second gear 360 may be rotatably mounted to the second baseplate 310 through a rotating shaft, a bearing, or the like. When the second gear 360 rolls along the toothed bar 110 under the drive of the second motor 350, it can drive the second baseplate 310 to slide in the preset direction, thereby driving the lifting assembly 220 and the blocking assembly 240 to move in the preset direction.

In the present embodiment, a cleaning head 341 is formed thereon with a stop ring 3411, which is capable of abutting against an opening edge of the injection cup 31 when the cleaning head 341 enters the injection cup 31 and covering an opening of the injection cup 31.

The stop ring 3411 may be integrally formed with the cleaning head 341. Since the stop ring 3411 can cover the opening of the injection cup 31, it may prevent the cleaning fluid from splashing outward from the opening of the injection cup 31 during the cleaning process. The waste water produced from the cleaning may be discharged only from the liquid-draining hole of the injection cup 31, thereby keeping the working environment clean effectively.

Further, in the present embodiment, the stop ring 3411 may elastically abut against the opening edge of the injection cup 31 in the up-down direction. On one hand, the elastic abutment may prevent the injection cup 31 from being damaged due to the hard contact of the stop ring 3411 with the opening edge of the injection cup 31. On the other hand, the elastic abutment may produce a preload, so that the stop ring 3411 may be reliably abutted against the opening edge of the injection cup 31. It is less likely for the stop ring 3411 to be separated from the injection cup 31 due to the influence of factors such as shaking, thereby better achieving the purpose of covering the opening of the injection cup 31.

Similarly, the stop ring 3411 may elastically abut against the opening edge of the injection cup 31 by means of the preload provided by a second elastic element 344 such as a compression spring.

In addition, in the present embodiment, the lid-disassembling device 10 further includes a discharging-conveying line 600, and the cleaning mechanism 300 further comprises a second gripping assembly 330. Wherein, the second gripping assembly 330 is mounted on the second baseplate 310, is capable of clamping or releasing the upper lid 30, is capable of moving above the waste-discharging carrier 500 along with the second baseplate 310, and is capable of moving in the up-down direction under the drive of the second lifting assembly 320 so as to clamp the upper lid 30 carried on the waste-discharging carrier 500. The second gripping assembly 330 is capable of moving above the discharging-conveying line 600 along with the second baseplate 310, and is capable of moving in the up-down direction under the drive of the second lifting assembly 320 so as to place the clamped upper lid 30 on the discharging-conveying line 600.

The discharging-conveying line 600 is provided spaced from the waste-discharging assembly in the preset direction, and can convey the upper lid 30 to a designated position for recycling. After the second gripping assembly 330 moves above the waste-discharging carrier 500, the second lifting assembly 320 first drives the second gripping assembly 330 and the cleaning assembly 340 to descend until the second gripping assembly 330 can clamp the upper lid 30, and allows the plurality of cleaning heads 341 to enter the plurality of injection cups 31 respectively for cleaning; after cleaning of the injection cup 31 is completed, the second lifting assembly 320 then drives the second gripping assembly 330 to ascend, so as to lift the upper lid 30 from the waste-discharging carrier 500; then, the second baseplate 310 moves toward the discharging-conveying line 600 in the preset direction until the second gripping assembly 330 moves above the discharging-conveying line 600; finally, the second lifting assembly 320 drives the second gripping assembly 330 to descend and release the upper lid 30, so as to place the upper lid 30 on the discharging-conveying line 600 for recycling.

It should be noted that, in other embodiments, the upper lid 30 may be directly taken away from the waste-discharging carrier 500 for recycling.

The structure of the second gripping assembly 330 may also be the same as that of the gripping assembly 230. Specifically, in the present embodiment, the second gripping assembly 330 comprises a second supporting plate 331, a second driving member 332, and two second clamping plates 333 provided oppositely. The second supporting plate 331 is connected to a driving end of the second lifting assembly 320, each of the second clamping plates 333 is provided with a second positioning pin 334 on one side of the second clamping plate 333 facing the other second clamping plate 333, the two second clamping plates 333 are slidably mounted on the second supporting plate 331, and the second driving member 332 is capable of moving the two second clamping plates 333 closer to or away from each other, so that the second positioning pin 334 enters a mounting hole 301 on the side surface of the upper lid 30 (see FIG. 9) or exits from the mounting hole 301.

The second clamping plate 333 may be slidably provided on the second supporting plate 331 via a guide rail and a slider, and the second driving member 332 may be an air cylinder. The two second clamping plates 333 may be driven by the same second driving member 332, or may be driven by two second driving members 332 respectively. Under the drive of the second lifting assembly 320, the second supporting plate 331 is capable of moving downward until the second positioning pin 334 is aligned with the mounting hole 301 on the side surface of the upper lid 30. At this time, the second driving member 332 drives the two second clamping plates 333 to approach each other, and the second positioning pin 334 may be inserted into the mounting hole 301, thereby clamping the upper lid 30. When it is necessary to release the upper lid 30, the second driving member 332 drives the two second clamping plates 333 away from each other until the second positioning pin 334 exits from the mounting hole 301.

Regarding the above lid-disassembling device 10 and the battery electrolyte injection apparatus, when the battery that has completed quiescence moves beneath the conveying mechanism 200 along with the pallet 20 and the upper lid 30, the gripping assembly 230 may first be driven by the lifting assembly 220 to move downward, and the upper lid 30 is then clamped by the gripping assembly 230. While the gripping assembly 230 clamps the upper lid 30, the plugs 241 of the plurality of blocking assemblies 240 may respectively enter the plurality of injection cups 31 and block the liquid-draining holes of the injection cups 31. Then, the gripping assembly 230 is moved upward under the drive of the lifting assembly 220 so as to remove the upper lid 30 from the pallet 20 carrying the batteries and thus separate the injection cups 31 from the batteries. In this process, since the plurality of plugs 241 respectively block the liquid-draining holes of the plurality of injection cups 31, when the injection cups 31 are separated from the batteries, the residual electrolyte cannot leak out through the liquid-draining hole even if the electrolyte remains in the injection cups 31, thereby effectively preventing the batteries in the pallet 20 from being contaminated by the electrolyte.

The technical features of the above embodiments can be combined arbitrarily. For the sake of brevity, not all possible combinations of the individual technical features of the above embodiments are described. However, a combination of these technical features shall be considered to be within the scope of the present specification, as long as there is no contradiction in the combination.

The above embodiments are merely expressions of a few implementations of the present disclosure described in a specific and detailed manner, and are not to be construed as limitation to the scope of the present disclosure. It is to be noted that for a person of ordinary skill in the art, various modifications and improvements could be made without departing from the principle of the present disclosure, and shall fall into the protection scope of the present disclosure. Therefore, the protection scope of the present disclosure shall be subject to the appended claims.

## Claims

1. A lid-disassembling device, **characterized by** comprising:
a rack; and
a conveying mechanism mounted on the rack and comprising a lifting assembly, a gripping assembly and a plurality of blocking assemblies, wherein the gripping assembly is capable of clamping or releasing an upper lid containing a plurality of injection cups and is capable of moving in an up-down direction under the drive of the lifting assembly so as to remove the upper lid from a pallet, and each of the blocking assemblies comprises a plug;
wherein the blocking assemblies are capable of moving along with the gripping assembly, and when the gripping assembly clamps the upper lid, plugs of the plurality of blocking assemblies are capable of respectively entering the injection cups and blocking liquid-draining holes of the injection cups.

2. The lid-disassembling device according to claim 1, **characterized in that** the gripping assembly comprises a supporting plate, a driving member, and two clamping plates arranged oppositely, the supporting plate is connected to a driving end of the lifting assembly, each clamping plate is provided with a positioning pin on one side thereof facing the other clamping plate, the two clamping plates are slidably mounted on the supporting plate, and the driving member is capable of driving the two clamping plates to move closer to or away from each other, so that the positioning pin enters a mounting hole on a side surface of the upper lid or exits from the mounting hole.

3. The lid-disassembling device according to claim 2, **characterized in that** the conveying mechanism further comprises a baseplate for supporting the lifting assembly, the gripping assembly and the blocking assemblies, the baseplate is mounted on the rack, the gripping assembly further comprising a guide rod extending in the up-down direction, the baseplate is provided with a linear bearing, and the guide rod slidably extends through the linear bearing, and is connected to the supporting plate at one end of the guide rod.

4. The lid-disassembling device according to claim 2 or 3, **characterized in that** the plurality of blocking assemblies are mounted on the supporting plate and are capable of moving in the up-down direction along with the supporting plate.

5. The lid-disassembling device according to any one of claims 1 to 4, **characterized in that** the plug is capable of elastically abutting against the bottom of the injection cup in the up-down direction.

6. The lid-disassembling device according to claim 5, **characterized in that** each blocking assembly further comprises a base and an elastic element, the plug is slidably mounted on the base in the up-down direction, and the elastic element applies a downward preload to the plug.

7. The lid-disassembling device according to claim 6, **characterized in that** the base is columnar, and the elastic element is a compression spring sleeved onto the base and abutting against the plug.

8. The lid-disassembling device according to any one of claims 1 to 7, **characterized by** further comprising a waste-discharging carrier provided on the rack, the conveying mechanism is capable of moving in a preset direction perpendicular to the up-down direction to drive the gripping assembly to move above the waste-discharging carrier, and the gripping assembly is capable of moving in the up-down direction under the drive of the lifting assembly and is capable of placing the clamped upper lid on the waste-discharging carrier.

9. The lid-disassembling device according to claim 8, **characterized in that** the rack is provided with a toothed bar extending in the preset direction, the conveying mechanism further comprises a baseplate for supporting the lifting assembly, the gripping assembly and the blocking assemblies, the baseplate is slidably mounted on the rack in the preset direction, the conveying mechanism further comprises a motor mounted on the baseplate and a gear connected to the motor, the gear is engaged with the toothed bar, and the gear is capable of rolling along the toothed bar under the drive of the motor so as to drive the baseplate to slide in the preset direction.

10. The lid-disassembling device according to claim 8 or 9, **characterized by** further comprising a cleaning mechanism mounted on the rack, and the cleaning mechanism is capable of moving above the waste-discharging carrier in the preset direction and is capable of cleaning the plurality of injection cups placed in the upper lid of the waste-discharging carrier.

11. The lid-disassembling device according to claim 10, **characterized in that** the cleaning mechanism comprises a second baseplate, a second lifting assembly and a cleaning assembly, the second baseplate is slidably mounted on the rack in the preset direction, the second lifting assembly and the cleaning assembly are mounted on the second baseplate, the cleaning assembly is capable of moving above the waste-discharging carrier along with the second baseplate, the cleaning assembly comprises a plurality of cleaning heads, and the plurality of cleaning heads are capable of respectively entering the plurality of injection cups carried by the upper lid of the waste-discharging carrier under the drive of the second lifting assembly.

12. The lid-disassembling device according to claim 11, **characterized by** further comprising a discharging-conveying line, and the cleaning mechanism further comprises a second gripping assembly, which is mounted on the second baseplate, is capable of clamping or releasing the upper lid, is capable of moving above the waste-discharging carrier along with the second baseplate, and is capable of moving in the up-down direction under the drive of the second lifting assembly so as to clamp the upper lid carried on the waste-discharging carrier; and
the second gripping assembly is capable of moving above the discharging-conveying line along with the second baseplate, and is capable of moving in the up-down direction under the drive of the second lifting assembly so as to place the clamped upper lid on the discharging-conveying line.

13. The lid-disassembling device according to claim 11, **characterized in that** the cleaning head is formed with a stop ring, which is capable of abutting against an opening edge of the injection cup when the cleaning head enters the injection cup and covering an opening of the injection cup.

14. The lid-disassembling device according to claim 13, **characterized in that** the stop ring is capable of elastically abutting against the opening edge of the injection cup in the up-down direction.

15. A battery electrolyte injection apparatus, **characterized by** comprising the lid-disassembling device according to any one of claims 1 to 14.
